# EUROPEAN PATENT APPLICATION

(11) **EP 3 127 595 A1**
(43) Date of publication of application: **08.02.2017**
(21) Application number: 15191147.6
(22) Date of filing: 23.10.2015
(51) Int. Cl.: B01D 39/16

(54) **SELF-SUPPORT ELECTROSTATIC FILTER AND A FILTERING DEVICE THEREOF**

(30) Priority: 06.08.2015 TW 104212711
(71) Applicant: K.J. Filtration Technologies Ltd., Taoyuan City 33856 (TW)
(72) Inventor: FU, Hau-Cheng, Taoyuan City 33856 (TW)
(74) Representative: Cabinet Chaillot

(57) **Abstract**

A self-support electrostatic filter (60) has a filter media (20) made of charged filter media with a first surface (21) and a second surface (22), and two non-woven scrim layers (30) made of welded long fibers (31). The non-woven scrim layers (30) are ultrasonically bounded with the surfaces of the self-support electrostatic filter (60) to form a triple layered filter media (40) with supporting surfaces. Thus the triple layered filter media (40) can be wavy folded for self-support without adhering to a piece of expanded metal mesh.

## Description

### BACKGROUND OF THE INVENTION

### 1. Field of the Invention:

The present invention relates to a self-support electrostatic filter and a filter device thereof, particularly to one that has two non-woven scrim layers replacing a piece of expanded metal mesh to form a triple layered filter media with self-support.

### 2. Description of the Related Art:

Conventional filter media is made of weaved fibers that allow air flows through the spaces in-between to filter the dusts in the airflow. Therefore, the spaces in-between has a direct effect on the dust loading capacity of the filter media. The fibers used in conventional filter media are comparatively thicker, thus the spaces in-between are comparatively wider. Such filter media has high permeability, but when it comes to minor dusts in submicron scale, the filtering function cannot work very well. For minor dusts, it requires thinner fibers to make the filter media with meticulously even and dense structure for filtering; however, the permeability would be lower and the pressure loss would be higher with such structure, and the dense structure would result in low dust loading capacity. In that case, conventional filter media has less efficiency in filtering and therefore increases the burden of a highly efficient filter arranged behind, and the method for increasing filter efficiency would cause more pressure loss and lower dust loading capacity, both would shorten the durability of the device.

If the fibers are electrostatic, the scale of dusts would not be a problem. The unblocked dusts would be attracted back to the surface of the filter media, achieving the filter function effectively. In that case, the meticulously even and dense structure is not necessary anymore, and the filter media would be highly permeable and have high dust loading capacity. Such structure has been disclosed in US Patent No. 6,703,072, No. 5,350,620 and Taiwanese Patent No. 449549.

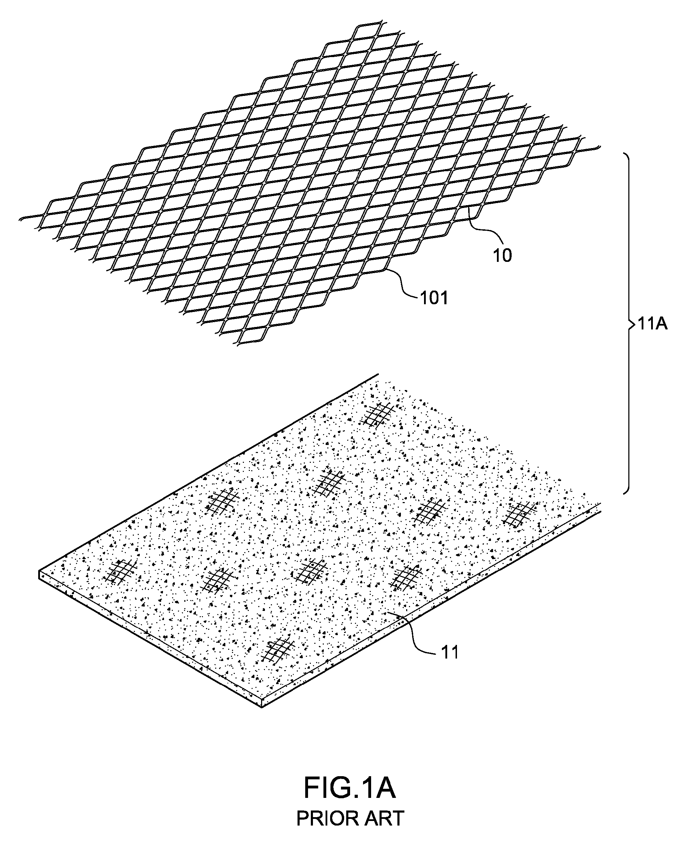

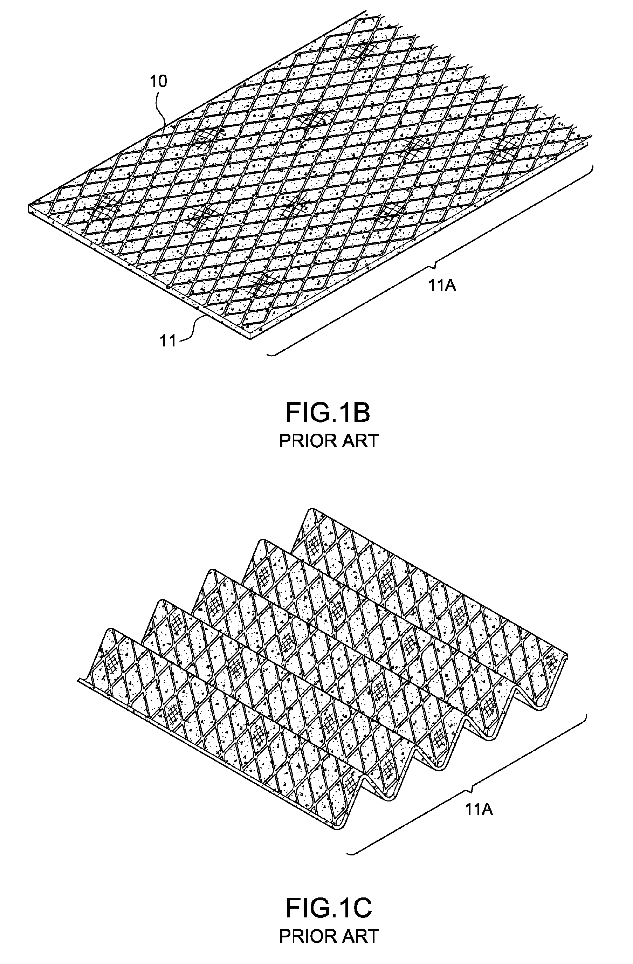

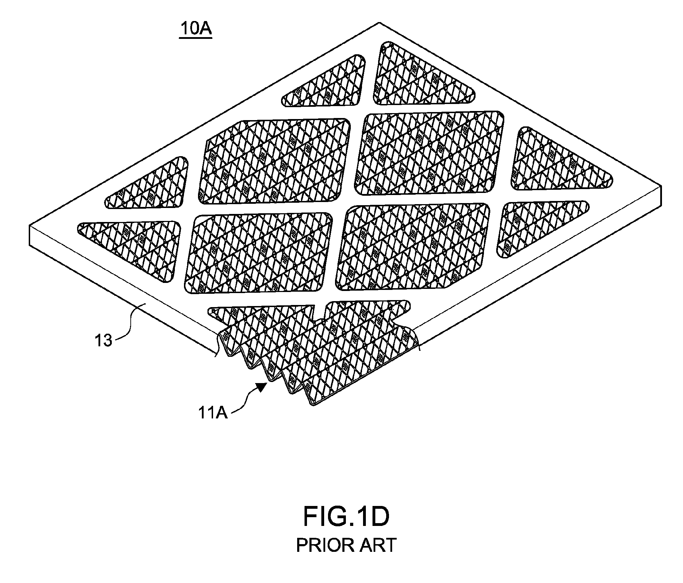

On the other hand, nowadays a folded filter media is widely used in the market. It has the filter media disclosed above to be folded to have larger filter area, longer durability, and therefore higher filtering efficiency. However, it has a piece of expanded metal mesh packing from the outside for support and reducing the shaking in the process since the charged filter media tends to deform and be blown away during operation. The manufacturing process of such structure is illustrated FIGS. 1A-1D. FIG. 1A shows the process of spreading glues **101** on the surface of a piece of expanded metal mesh **10** and then adhering it to a filter media **11.** FIG. 1B shows the expanded metal mesh **10** being adhered to the filter media **11** to form a filter with support 11 A. FIG. 1C shows the supported filter **11A** being wavy folded to increase the filter area. FIG. 1D shows the supported filter **11A** being disposed into a packing frame **13** for shaping and forming a filter device with external frame **10A**.

Still, the structure with a piece of expanded metal mesh **10** has shortcomings to be improved as following.
1. The expanded metal mesh piece **10** is used for support only; it does not help in increasing the efficiency in filtering.
2. The expanded metal mesh piece **10** has to be adhered to the filter media **11.** The glues used for adhesion may block the spaces on the filter media **11,** thus affecting the filter function, and the airflow through the filter media **11** would be obstructed as well, thus increasing pressure loss in the filtering process.
3. The glues used for adhesion would also cause lower dust loading capacity of the filter media **11.**
4. The two-staged process of spreading glues and adhering would cost time and require more attention to the spreading process of the glues, causing more efforts in manufacturing.
5. When disposing of the filter media **11** for incineration, the expanded metal mesh piece **10** has to be detached from the filter media **11,** but the glues make it difficult to be detached. Consequently, it requires more efforts in detaching. Also, the glues left on the filter media **11** would cause pollution after incineration.

Therefore, the inventor is trying to overcome the problems and shortcomings disclosed in the structures above.

### SUMMARY OF THE INVENTION

A primary object of the present invention is to provide a self-support electrostatic filter and a filter device thereof that have two non-woven scrim layers replacing a piece of expanded metal mesh to solve the problem of lack of support in the prior art by having the filter self-supported.

Another object of the present invention is to provide a self-support electrostatic filter and a filter device thereof that have no glues or adhesives in the filter media so that the air flowing through would not be obstructed, thus lowering pressure loss.

Another object of the present invention is to provide a self-support electrostatic filter and a filter device thereof that have a filter media with high porosity layer structure to achieve high dust loading capacity.

Another object of the present invention is to provide a self-support electrostatic filter and a filter device thereof that have a filter media formed in one-step process instead of two-staged process of gluing and binding.

Yet another object of the present invention is to provide a self-support electrostatic filter and a filter device thereof that are eco-friendly without glues and a piece of expanded metal mesh, so that the filter media thereof can be incinerated directly without producing toxic materials.

To achieve the objects mentioned above, the present invention comprises a filter media and two thin non-woven scrim layers according to the annexed claims, so as to form a triple layered filter media

All in all, the present invention has two non-woven scrim layers replacing a piece of expanded metal mesh for self-support. It has the advantage of a strong structure as the expanded metal mesh does, to reduce the influences from airflow and avoid deformation. Also, it has less shaking and self-support without the expanded metal mesh and glues, and improves properties of high pressure loss, low dust loading capacity, two-staged processing, and causing environmental pollution in the prior art as well.

### BRIEF DESCRIPTION OF THE DRAWINGS

FIG. 1A is a schematic diagram illustrating a piece of expanded metal mesh to be adhered to a filter media in the prior art;
FIG. 1B is a schematic diagram illustrating a piece of expanded metal mesh adhered to a filter media in the prior art;
FIG. 1C is a schematic diagram illustrating a filter media with a piece of expanded metal mesh to be wavy folded;
FIG. 1D is a schematic diagram of a conventional filter device;
FIG. 2 is an exploded view of the present invention;
FIG. 3 is a schematic diagram of a piece of thin scrim layer formed by welded long fibers;
FIG. 4 is a schematic diagram illustrating the filter media of the present invention formed in one-step processing;
FIG. 5 is a perspective view of the filter media of present invention;
FIG. 6 is a sectional view of FIG. 5;
FIG. 7 is a schematic diagram illustrating the filter media being wavy folded; and
FIG. 8 is a perspective view of the filter device of the present invention.

### DETAILED DESCRIPTION OF THE PREFERRED EMBODIMENT

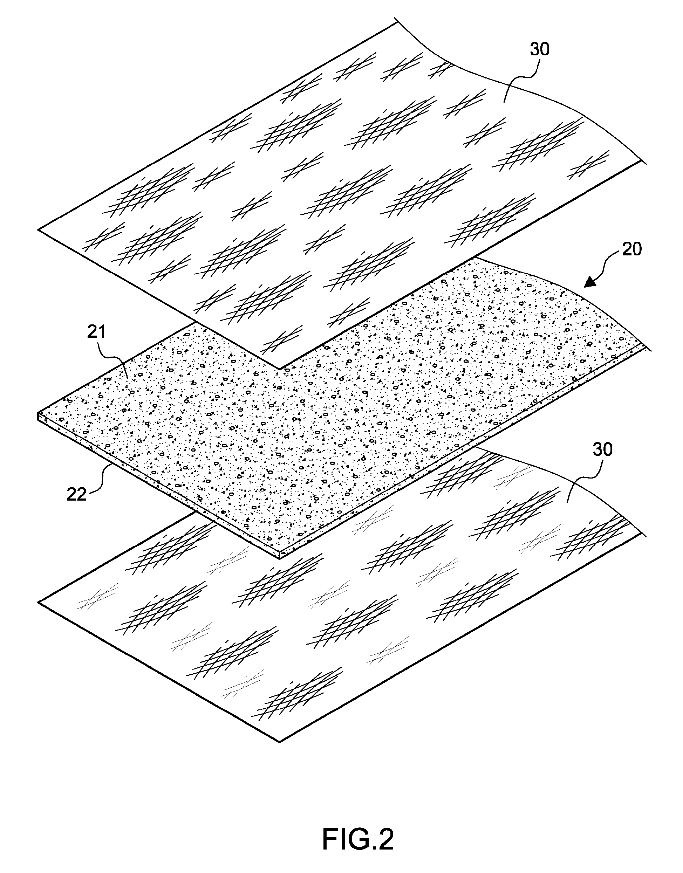

Referring to FIGS. 2 to 8, in a preferred embodiment the present invention comprises a filter media **20** made of charged filter media, having a first surface **21** and a second surface **22** at the opposite side of the first surface. The charged filter media is electrostatic for attraction to unblocked dusts. The feature of the present invention lies in that a binding structure on the surfaces of the filter media **20** is replacing conventional expanded metal mesh; the filter media **20** includes any brand of product in the markets such as Aerolace(®) and 3M(®).

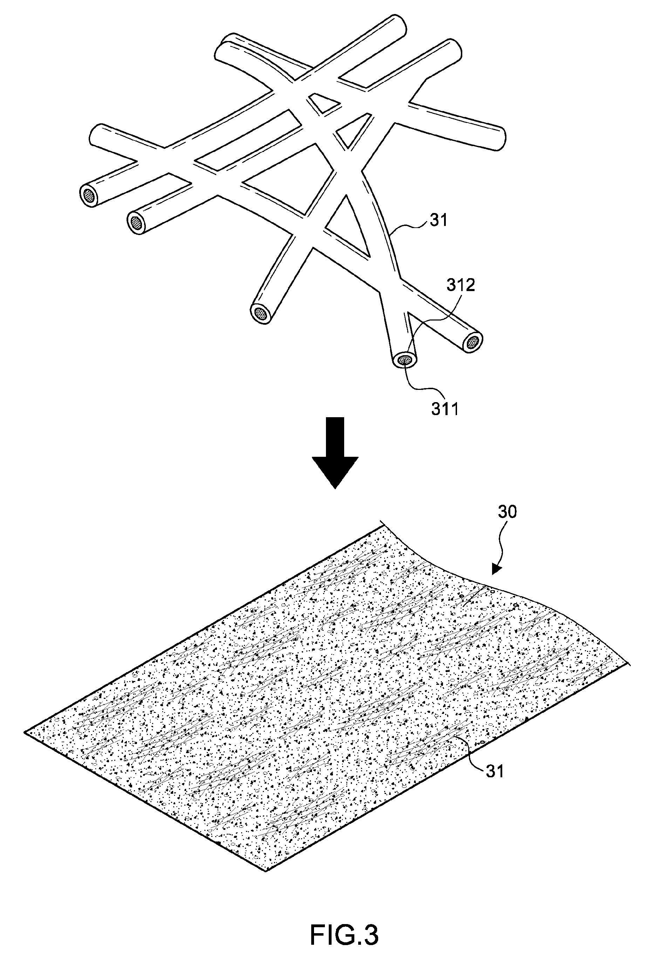

Referring to FIG. 2, the present invention has two thin non-woven scrim layers **30** made of a plurality of welded long fibers **31** and ultrasonically bounded on the first and second surface **21, 22 of** the filter media **20** individually. The manufacturing process of the non-woven scrim layers **30** is illustrated in FIG. 3; the long fibers **31** are formed in sparse instead of weaved pattern. The non-woven scrim layers **30** are homo-polymers; in the embodiment, the long fibers **31** are bi-component fibers including a core **311** made of polyester with comparatively higher melting point (170 °C) wrapped by a sheath **312** made of polypropylene with comparatively lower melting point (110 °C ~ 130 °C), so that the sheath **312** outside would be welded at a pre-determined degree of temperature, e.g. 140 °C but the core **311** inside would not due to its comparatively higher melting point. Therefore, the radial surface of the long fibers **31** would be stable for the long fibers **31** to be axially extended.

The non-woven scrim layers **30** are thin layers formed by welded long fibers **30** in sparse distribution, and it is preferred to have a weight between 10g~60g per square meter (m²). If the weight is less than10g/m², it would not be able to achieve the self-supporting function; if the weight is more than 60 g/m², the scrim layers **30** would not be light and thing enough as expected. Also, the long fibers **31** have a diameter between 30-70um to ensure enough space between each fiber for light weights.

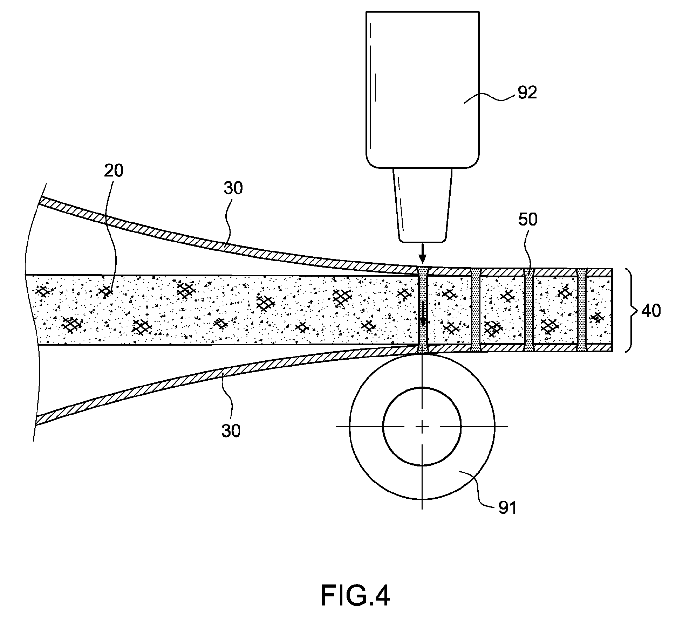

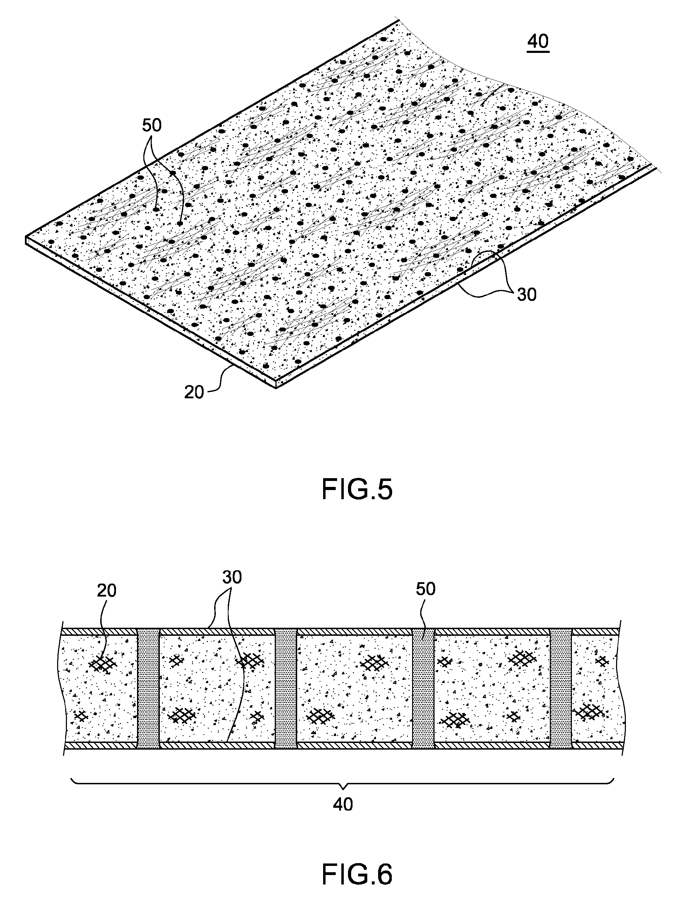

With reference to FIG. 4, in this embodiment the ultrasonic binding process of the non-woven scrim layers **30** on the first surface**21** and the second surface **22** forms a triple layered filter media **40** in a one-step process, achieving better efficiency and lower costs in the manufacturing process. The present invention is formed in a roll-to-roll manufacturing process that has a roller **91** rolling the scrim layers **30** and the filter media **20** for binding and an ultrasonic treatment device **92** performing the binding, and then has the bounded filter media **20** going through a needle punching process. A plurality of pinholes **50** are formed at the binding area of the scrim layers **30** and the filter media **20** as shown in FIGS. 5 and 6, so as to prevent the scrim layers **30** from detachment.

Further referring to FIG. 6, the triple layered filter media **40** does not need to be adhered to a piece of expanded metal mesh and consequently contains no glues. Therefore, only the places with pinholes **50** would encounter little pressure loss; the percentage of the pressure loss is less than 2%, which is comparatively much less than the number with having the expanded metal mesh adhered to the bounded filter media **20.** The influence of the airflow would be less with less pressure loss (Δp) controlled to be about 4pa. Meanwhile, the triple layered filter media **40** has a high porosity layer structure without glues to stop the dusts from passing through. Additionally, the charged filter media is electrostatic to attract the dusts. The present invention therefore achieves the feature of high dust loading capacity.

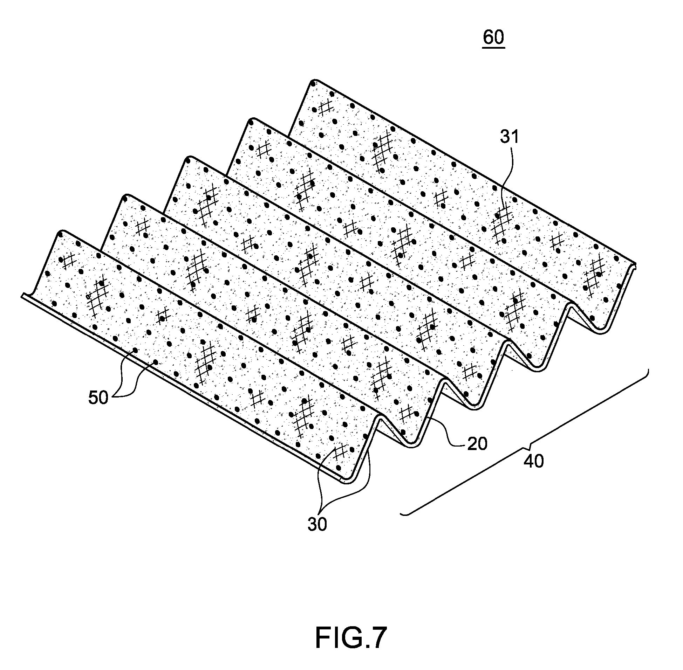

As shown in FIG. 7, the triple layered filter media **40** can be wavy folded for self-support, forming a self-support electrostatic filter **60.** Besides, the self-support electrostatic filter **60** is eco-friendly since it does not have glues and expanded metal mesh and is able to be incinerated directly, plus the materials have commonly low melting points for incineration, the present invention can reduce the waste of both resources and energy as a result.

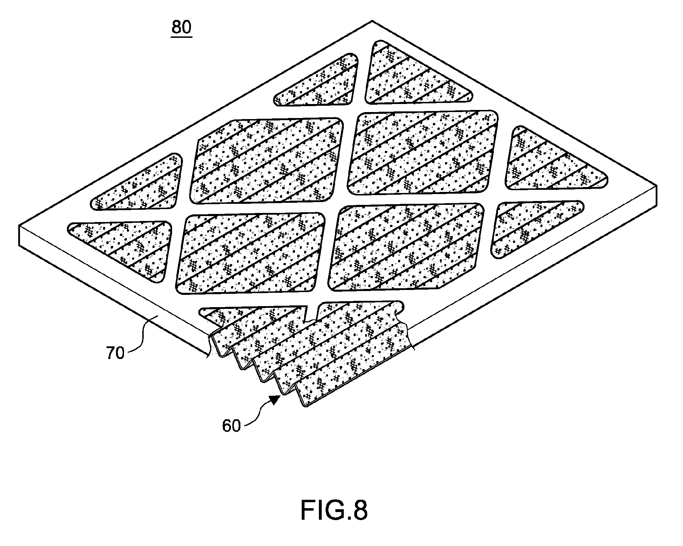

FIG. 8 shows an application of the present invention in a filter device **80.** The filter device **80** further comprises a packing frame **70** packing up the wavy folded triple layered filter media **40.** In this embodiment, the packing frame **70** is made of either paper board, plastic board, or metal board. Such filter device **80** with self-support electrostatic filter **60** is suitable for air-conditioned devices because it would not be affected by the pressure of winds.

Although particular embodiment of the invention has been described in detail for purposes of illustration, various modifications and enhancements may be made without departing from the spirit and scope of the invention. Accordingly, the invention is not to be limited except by the appended claims.

## Claims

1. A self-support electrostatic filter, comprising:
a filter media (20) made of charged filter media, having a first surface (21) and a second surface (22) at the opposite side of the first surface (21); and
two thin non-woven scrim layers (30) made of welded long fibers (31) and ultrasonically bounded on the first and second surface (21), (22) of the filter media (20) individually, so as to form a triple layered filter media (40);
whereby the triple layered filter media (40) can be wavy folded for self-support without adhering to a piece of expanded metal mesh.

2. The self-support electrostatic filter as claimed in claim 1, wherein the non-woven scrim layers (30) are homo-polymers with a weight between 10g ~60g per square meter.

3. The self-support electrostatic filter as claimed in claim 2, wherein the long fibers (31) of the non-woven scrim layers (30) have a diameter between 30-70um.

4. The self-support electrostatic filter as claimed in claim 3, wherein the long fibers (31) are bi-component fibers including a core (311) made of polyester with comparatively higher melting point wrapped by a sheath (312) made of polypropylene with comparatively lower melting point.

5. The self-support electrostatic filter as claimed in claim 4, wherein the binding area of the non-woven scrim layer (30) and the surfaces of the filter media (20) has a plurality of pinholes (50) formed thereon for positioning.

6. The self-support electrostatic filter as claimed in claim 1, wherein the triple layered filter media (20) has a high porosity layer structure.

7. A filter device made of a self-support electrostatic filter, comprising:
a filter media (20) made of charged filter media, having a first surface (21) and a second surface (22) on the opposite of the first surface (21);
two thin non-woven scrim layers (30) made of welded long fibers (31) and ultrasonically bounded on the first and second surface (21), (22) of the filter media (20) individually, so as to form a triple layered filter media (40) with a supporting surface to be wavy folded for stronger self-support; and
a packing frame (70) packing up the folded triple layered filter media (40).

8. The filter device made of a self-support electrostatic filter as claimed in claim 7, wherein the packing frame (70) is made of paper board, plastic board, or metal board.
